# FASCICULE DE BREVET EUROPEEN

(11) **EP 0 489 629 B1**
(45) Date de publication et mention de la délivrance du brevet: **09.03.1994**
(21) Numéro de dépôt: 91403239.6
(22) Date de dépôt: 29.11.1991
(51) Int. Cl.: B60S 1/34

(54) **Bras d'essuie-glace à tige guide de ressort, notamment pour véhicule automobile**
Scheibenwischerarm mit Federstange, insbesondere für Kraftfahrzeuge
Windscreen wiper arm with spring stem, in particular for automotive vehicle

(30) Priorité: 03.12.1990 FR 9015117
(43) Date de publication de la demande: 10.06.1992
(73) Titulaire: VALEO SYSTEMES D'ESSUYAGE, 78180 Montigny-Le-Bretonneux (FR)
(72) Inventeur: Schon, Wilfrid, F-63580 St. Etienne-sur-Usson (FR)
(74) Mandataire: Gamonal, Didier

(56) Documents cités:
- DE-A- 2 346 292
- DE-C- 848 754
- US-A- 2 071 310

## Description

La présente invention a pour objet un bras d'essuie-glace à tige guide de ressort, notamment pour véhicule automobile.

Il est connu des bras d'essuie-glace comportant une tête d'entraînement sur laquelle est articulé, au moyen d'un axe d'articulation cylindrique, un porte-balai portant à articulation, de manière connue en soi, un balai d'essuie-glace apte à balayer une surface vitrée, telle qu'un pare-brise de véhicule automobile.

Ces bras comportent, en outre, un système élastique interposé entre le porte-balai et la tête d'entraînement de façon à maintenir, au cours du fonctionnement de l'essuie-glace constitué par le bras et le balai, un appui élastique dudit balai d'essuie-glace sur la surface à essuyer.

Le système élastique consiste généralement en un ressort à spires qui peut travailler soit en traction soit en compression.

L'utilisation d'un ressort travaillant en traction présente de nombreux inconvénients dont le plus important est de rendre inefficace le balai d'essuie-glace lorsque l'une de ses spires vient à casser.

Dans le cas où l'on utilise un ressort agissant en compression, un tel ressort étant toujours monté sur une tige guide de ressort servant à limiter le flambage de celui-ci, si l'une de ses spires vient à casser, le bras sera toujours opérationnel en ne perdant qu'une faible partie de son efficacité dans le sens que l'effet de la spire cassée est annulé et l'effet de toutes les autres spires est maintenu.

Une telle tige guide de ressort, comme celle décrite par exemple dans le document DE-A-1 505 347, présente une première extrémité traversant une ouverture prévue dans une cloison portée par le porte-balai, cette cloison servant d'appui à l'une des extrémités du ressort, l'autre extrémité du ressort s'appuyant sur une surface d'appui prévue dans le corps de la tige guide de ressort qui présente une seconde extrémité s'articulant sur la tête d'entraînement autour d'un axe de débattement.

Un tel système élastique présente néanmoins quelques inconvénients.

En effet, pour pouvoir intervenir mécaniquement soit sur la surface à essuyer soit sur le bras d'essuie-glace, il est nécessaire de dégager le porte-balai en dehors de cette surface en faisant pivoter ledit porte-balai autour de l'axe d'articulation porté par la tête d'entraînement.

Ce pivotement s'effectue sous l'action d'un couple appliqué manuellement par l'utilisateur et il est prévu une butée permettant de limiter le mouvement de dégagement du porte balai d'essuie-glace par rapport au pare-brise.

Cependant, la Demanderesse a pu constater que, malgré cette butée, le couple appliqué pouvant être d'une grande intensité, il peut arriver que la butée s'efface et que le porte-balai continue son mouvement en ayant pour conséquence de faire quitter la tige guide de ressort en dehors de son ouverture prévue dans la cloison du porte-balai.

De ce fait, la tige guide de ressort n'étant plus guidée à une de ses extrémités, cette tige peut pivoter autour de l'axe de débattement et, par gravité, le ressort glisse le long de cette tige jusqu'à chuter à l'intérieur du compartiment moteur, ce qui peut générer des détériorations à l'intérieur de celui-ci.

La perte du ressort ainsi que le dégagement de la tige guide de ressort hors de l'ouverture de la cloison rend de ce fait le bras d'essuie-glace inopérationnel et nécessite, dans ce cas, de la part de l'utilisateur un remontage complet du bras d'essuie-glace.

La présente invention se propose de rémédier aux inconvénients mentionnés ci-dessus en présentant un bras d'essuie-glace dans lequel la tige guide de ressort sera maintenue sur ledit bras même en cas de dépassement de la butée.

Pour cela, selon l'invention, le bras d'essuie-glace, notamment pour véhicule automobile, comportant une tête d'entraînement, un porte-balai articulé par un axe sur ladite tête et un système élastique prenant appui en compression d'une part sur une tige guide de ressort portée par ladite tête d'entraînement et d'autre part sur une cloison solidaire du porte-balai, ladite tige guide de ressort traversant une ouverture prévue dans cette cloison, est caractérisé en ce que des moyens de maintien sont prévus entre la cloison du porte-balai et la tige guide de ressort.

Grâce à l'invention, la tige guide de ressort sera maintenue au moins au niveau de la cloison que porte le balai en cas de dépassement de butée.

Différentes caractéristiques ayant trait à des modes de réalisation de l'invention sont indiquées dans les revendications dépendantes 2 à 9.

Les autres caractéristiques et avantages de l'invention vont ressortir maintenant de la description qui va suivre en se référant aux dessins annexés sur lesquels :
- la figure 1 est une vue en coupe schématique d'un bras d'essuie-glace selon la présente invention ;
- la figure 2 est une vue en coupe selon la ligne AA de la figure 1 ;
- la figure 3 est une vue en coupe schématique d'une variante de réalisation de la présente invention ;
- la figure 4 montre en vue de dessus un organe du bras d'essuie-glace représenté en figure 1 ;
- la figure 5 est une vue en coupe selon la ligne BB de la figure 4 ;
- la figure 6 est une vue de dessus d'un organe du bras d'essuie-glace représenté en figure 3 ;
- la figure 7 est une vue en coupe selon la ligne CC de la figure 6.

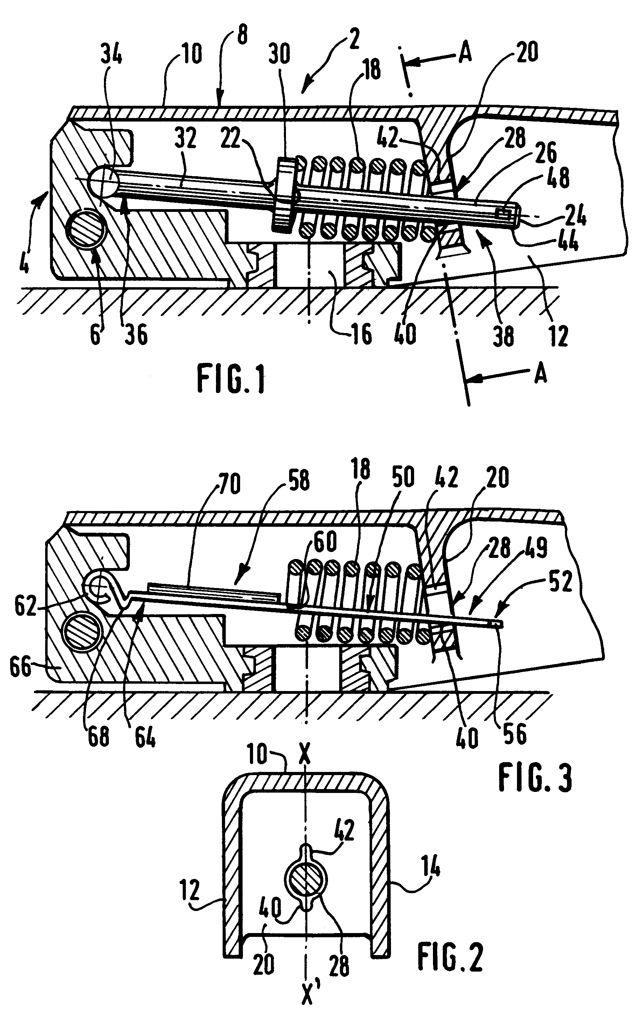

En se référant aux figures 1 et 2, un bras d'essuie-glace 2 se compose d'une tête d'entraînement 4 portant un axe d'articulation 6 autour duquel pivote un porte-balai 8 par une de ses extrémités, l'autre de ses extrémités portant, de manière connue en soi, un organe de liaison et d'articulation d'un balai d'essuie-glace.

Comme mieux visible sur la figure 2, le porte-balai 8 présente généralement une forme en section de U inversé se composant d'une âme 10 et deux ailes latérales 12, 14 venant envelopper la tête d'entraînement 4, cette tête (figure 1) présentant un alésage 16 orthogonal à l'axe 6 de manière à pouvoir être relié à un mécanisme d'entraînement d'essuyage générant un mouvement de rotation alternatif, tel qu'un moto-réducteur d'essuyage (non représenté).

Un système élastique, ici un ressort à spires 18 travaillant en compression, est interposé entre la tête d'entraînement 4 et le porte-balai 8 de manière à exercer sur ledit porte-balai une force tendant à le diriger vers la surface à essuyer (non représentée).

Le ressort 18 prend appui d'une part sur une cloison 20 prévue orthogonalement aux ailes 12, 14 et à l'âme 10 du porte-balai et d'autre part sur une surface d'appui 22 portée par une tige guide de ressort 24.

Comme visible sur les figures 1, 2, 4 et 5, la tige guide de ressort 24 présente un premier tronçon 26, de forme cylindrique en section, dont l'une des extrémités traverse une ouverture 28, également cylindrique, prévue dans la cloison 20, ladite tige guide de ressort se poursuivant à l'opposé vers son autre extrémité par une collerette 30 de plus grand diamètre, cette collerette 30 cylindrique présentant, en regard de l'ouverture 28, la surface d'appui 22, cette collerette se continuant en direction de la tête d'entraînement 4 par un second tronçon 32, cylindrique en section, qui se termine par une barre 34 orthogonale au second tronçon de façon à former un T inversé.

La barre 34 prend appui dans un logement 36 prévu dans la tête d'entraînement 4 de manière à autoriser un certain débattement de ladite tige pendant le fonctionnement du bras d'essuie-glace.

De manière préférentielle, le logement 36 est ouvert en direction de la tige guide de ressort 24.

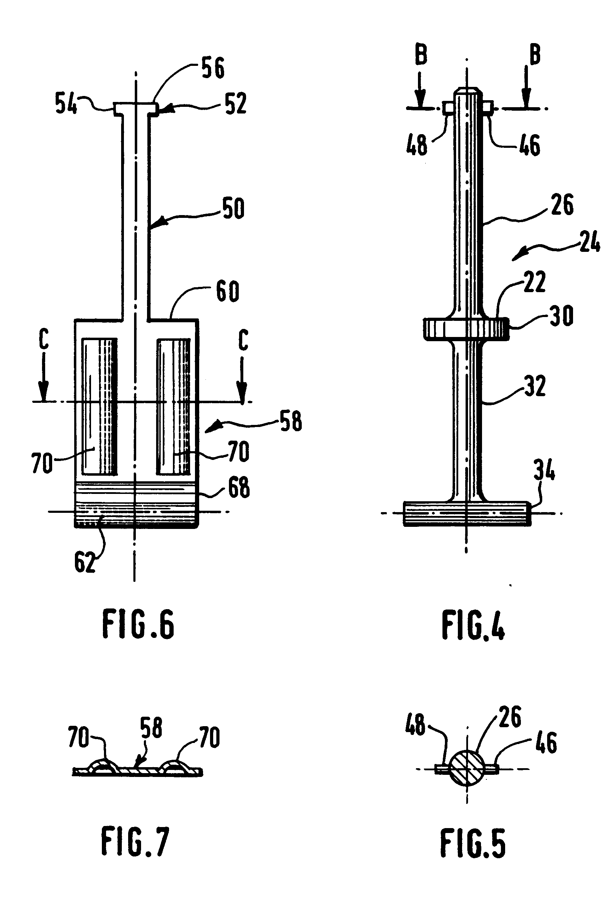

En se référant maintenant aux figures 2 et 5, le bras d'essuie-glace porte des moyens de maintien 38 de la tige guide de ressort 24 sur le porte-balai 8.

Ces moyens 38 consistent, de manière générale, en un assemblage du type baïonnette et pour cela l'ouverture 28 prévue dans la cloison 20 présente deux rainures 40, 42 diamétralement opposées fermées à l'une de leurs extrémités et débouchant par l'autre de leurs extrémités dans l'ouverture 28 en étant disposées selon une direction sensiblement verticale matérialisée sur la figure 2 par l'axe XX′.

De manière complémentaire, la tige guide de ressort 24 présente au niveau de son extrémité libre 44 du premier tronçon 26, deux protubérances 46, 48 disposées également diamétralement opposées possédant une dimension et une forme sensiblement identiques à celles des rainures 40, 42, ces protubérances étant situées dans un plan identique en direction à celui passant par l'axe de débattement de la barre 34.

Ainsi, après montage, comme cela est visible sur la figure 1, les protubérance 46, 48 se trouvent dans un plan décalé à celui de l'axe XX′ des rainures 40, 42, ici décalé dans un plan orthogonal.

Pour le montage, il suffit simplement de faire glisser l'extrémité libre 44 de la tige guide de ressort dans l'ouverture 28 en faisant coopérer les protubérances 46, 48 avec les rainures 40, 42 portées par la cloison 20 et par un mouvement de rotation d'environ 90°, faire en sorte que les protubérances 44, 46 soient situées dans un plan orthogonal à celui des rainures 40, 42 au-delà dela cloison 20.

Lors de ce montage le ressort 18 est emprisonné entre la cloison 20 et la surface d'appui 22 en sollicitant la tige guide de ressort vers la tête d'entraînement jusqu'à ce que les protubérances 40, 42 viennent porter sur la cloison 20 en maintenant ainsi la tige 24 et le ressort 18 sur le porte-balai et il suffit d'introduire la barre 34 dans le logement 36 pour rendre opérationnel le bras 2.

Ainsi, en cas de pivotement angulaire du porte-balai 8 autour de l'axe de pivotement 6 dans le sens anti-horaire, et en considérant que l'axe 34 de débattement formé par la barre 34 soit un axe fixe avec la tête 4, la tige guide de ressort 24 ne pourra pas quitter l'ouverture 28 de la cloison 20 par appui des protubérances 46, 48 sur la face de la cloison 20 opposée à celle sur laquelle s'appuie le ressort 18 et servira en outre de second moyen de butée dans le cas où la butée prévue entre le porte-balai et la tête s'efface lors de la manoeuvre.

Dans le cas où, comme précédemment mentionné, la barre 34 servant d'axe de pivotement de la tige guide de ressort 24 est supportée par la tête d'entraînement 4 dans un logement 36 ouvert en direction de la cloison 20, la tige guide de ressort et le ressort 18 seront maintenus sur le porte-balai 8, même si le couple en rotation autour de l'axe 6 du porte-balai est tel que la butée entre la tête et le porte-balais s'efface en ayant pour unique conséquence de faire sortir la barre 34 hors du logement 36, la tige guide de ressort et le ressort restant liés au porte-balai et il suffit uniquement de replacer la barre 34 dans son logement 36 pour rendre le bras opérationnel dans son ensemble.

On se référe maintenant aux figures 3, 6 et 7, qui montrent une variante de réalisation de la présente invention dans laquelle seule la configuration de la tige guide de ressort est légèrement modifiée.

Dans le cas des figures 6 et 7, la tige guide de ressort 49 est élaborée à partir d'un feuillard métallique découpé et plié et comporte une première partie de forme rectangulaire 50 de forme allongée portant à l'une de ses extrémités une deuxième partie de forme rectangulaire 52 de dimension transversale plus grande de manière à créer, comme précédemment indiqué, deux protubérances 54, 56, ladite partie 50 se poursuivant à son autre extrémité par une troisième partie 58 également de forme rectangulaire de plus grande dimension transversale que celle de la dimension transversale de la partie 52 de façon à présenter une surface d'appui 60 disposée en vis-à-vis des protubérances 54, 56 formées par la seconde partie rectangulaire 52.

La troisième partie 58 présente à son extrémité libre un axe 62 formé par roulage de cette extrémité libre de façon à présenter une surface sensiblement cylindrique, cet axe servant d'axe de débattement de la tige guide de ressort 49 en étant logé dans un logement 64 porté de manière identique à celle de la figure 1 par la tête d'entraînement 66 en présentant une face ouverte dirigée vers la cloison du porte-balai.

Entre l'axe 62 et la surface d'appui 60 sont prévus, à partir de cet axe, un premier enfoncement 68 parallèle à l'axe 62 et servant de moyen d'absorption d'excès de tension du ressort, et un deuxième enfoncement 70 orthogonal au premier enfoncement 68 de manière à rigidifier la troisième partie 58 de la tige guide de ressort 49.

Ainsi, la tige guide de ressort 49 peut aisément remplacer la tige guide de ressort 24 décrite en relation avec la figure 1, tout en ayant les mêmes moyens de butée qui dans le cas de la tige guide de ressort 49 sont constitués par les protubérances 54, 56 venant coopérer, si nécessaire, avec la face de la cloison opposée à celle sur laquelle s'appuie le ressort.

La présente invention n'est pas limitée aux exemples de réalisations décrits mais englobe toutes variantes, à condition de rester dans le cadre de l'invention telle que définie par les revendications.

Notamment, il peut être envisagé que les protubérances soient des protubérances rapportées par tous moyens appropriés.

## Revendications

1. Bras d'essuie-glace, notamment pour véhicule automobile, comportant une tête d'entraînement (4), un porte-balai (8) articulé par un axe (6) sur ladite tête et un système élastique (18) prenant appui en compression d'une part sur une tige guide de ressort (24,49) portée par ladite tête d'entraînement et d'autre part sur une cloison (20) solidaire du porte-balai (8), ladite tige traversant une ouverture (28) prévue dans cette cloison, caractérisé en ce que des moyens de maintien (40,42,46,48,54,56) sont prévus entre la cloison (20) du porte-balai (8) et la tige guide de ressort (24,49).

2. Bras d'essuie-glace selon la revendication 1, caractérisé en ce que les moyens de maintien sont formés par des butées (46,48,54,56) portant sur la cloison (20).

3. Bras d'essuie-glace selon la revendication 2, caractérisé en ce que les butées (46,48,54,56) sont portées par la tige guide de ressort (24,29).

4. Bras d'essuie-glace selon l'une des revendications 2 ou 3, caractérisé en ce que les butées sont formées par des protubérances (46,48,54,52) de la tige guide de ressort (24,49).

5. Bras d'essuie-glace selon l'une des revendications précédentes, caractérisé en ce que la cloison (20) présente une ouverture (28) munie de deux rainures (40,42).

6. Bras d'essuie-glace selon l'une des revendications précédentes, caractérisé en ce que les rainures (40,42) sont disposées dans un plan décalé à celui des protubérances (46,48,52,54).

7. Bras d'essuie-glace selon l'une des revendications précédentes, caractérisé en ce que les rainures (40,42) et les protubérances (46,48,54,56) sont utilisées dans un montage du type baïonnette.

8. Bras d'essuie-glace selon l'une des revendications précédentes, caractérisé en ce quela tige guide de ressort (24,49) présente un axe de débattement (34,62) porté par un logement (36,64) ouvert.

9. Bras d'essuie-glace selon l'une des revendications précédentes, caractérisé en ce que la tige guide de ressort (24,49) présente des enfoncements (68,70).

## Patentansprüche

1. Scheibenwischerarm, insbesondere für ein Kraftfahrzeug, enthaltend einen Antriebskopf (4), einen Wischblatthalter (8), der mittels einer Achse (6) gelenkig am genannten Kopf angebracht ist, und ein elastisches System (18), welches unter Einwirkung eines Drucks einerseits auf einer Federstange (24, 49) aufliegt, die vom genannten Antriebskopf getragen wird, und andererseits auf einer fest mit dem Wischblatthalter (8) verbundenen Trennwand (20), wobei die genannte Stange durch eine in dieser Trennwand vorgesehene Öffnung (28) hindurchtritt, **dadurch gekennzeichnet**, daß zwischen der Trennwand (20) des Wischblatthalters (8) und der Federstange (24, 49) Haltemittel (40, 42, 46, 48, 54, 56) vorgesehen sind.

2. Scheibenwischerarm nach Anspruch 1, **dadurch gekennzeichnet**, daß die Haltemittel aus Anschlägen (46, 48, 54, 56) bestehen, die auf der Trennwand (20) aufliegen.

3. Scheibenwischerarm nach Anspruch 2, **dadurch gekennzeichnet**, daß die Anschläge (46, 48, 54, 56) auf der Federstange (24, 29) aufliegen.

4. Scheibenwischerarm nach einem der Ansprüche 2 oder 3, **dadurch gekennzeichnet**, daß die Anschläge aus Ausstülpungen (46, 48, 54, 52) der Federstange (24, 49) bestehen.

5. Scheibenwischerarm nach einem der vorherigen Ansprüche, **dadurch gekennzeichnet**, daß die Trennwand (20) eine mit zwei Nuten (40, 42) versehene Öffnung (28) aufweist.

6. Scheibenwischerarm nach einem der vorherigen Ansprüche, **dadurch gekennzeichnet**, daß die Nuten (40, 42) in einer Ebene angeordnet sind, die gegenüber der Ebene der Ausstülpungen (46, 48, 52, 54) versetzt ist.

7. Scheibenwischerarm nach einem der vorherigen Ansprüche, **dadurch gekennzeichnet**, daß die Nuten (40, 42) und die Ausstülpungen (46, 48, 54, 56) in einer Bajonett-Anordnung verwendet werden.

8. Scheibenwischerarm nach einem der vorherigen Ansprüche, **dadurch gekennzeichnet**, daß die Federstange (24, 49) eine auf einem offenen Aufnahmesitz (36, 64) ruhende Verschiebeachse (34, 62) aufweist.

9. Scheibenwischerarm nach einem der vorherigen Ansprüche, **dadurch gekennzeichnet**, daß die Federstange (24, 49) Vertiefungen (68, 70) aufweist.

## Claims

1. A windshield wiper arm, in particular for a motor vehicle, comprising a driving head (4), a blade-holder (8) articulated by a pin (6) on said head and an elastic system resting, when compressed, firstly on a spring stem (24, 29) borne by said driving head and secondly on a partition (20) in one piece with the blade-holder (8), said stem passing through an aperture (28) provided in said partition,
**characterised in that** retention means (40, 42, 46, 48, 54, 56) are provided between the partition (20) of the blade-holder (8) and the spring stem (24, 29).

2. A windshield wiper arm according to Claim 1,
**characterised in that** the retention means are formed by stops (46, 48, 54, 56) bearing on the partition (20).

3. A windshield wiper arm according to Claim 2,
**characterised in that** the stops (46, 48, 54, 56) are borne by the spring stem (24, 29).

4. A windshield wiper arm according to one of Claims 2 or 3,
**characterised in that** the stops are formed by protuberances (46, 48, 54, 52) of the spring stem (24, 49).

5. A windshield wiper arm according to one of the preceding Claims,
**characterised in that** the partition (20) has an aperture (28) equipped with two grooves (40, 42).

6. A windshield wiper arm according to one of the preceding Claims,
**characterised in that** the grooves (40, 42) are disposed in a plane offset from that of the protuberances (46, 48, 52, 54).

7. A windshield wiper arm according to one of the preceding Claims,
**characterised in that** the grooves (40, 42) and the protuberances (46, 48, 54, 56) are used in a bayonet-type mounting.

8. A windshield wiper arm according to one of the preceding Claims,
**characterised in that** the spring stem (24, 29) has an axis of deflection (34, 62) borne by an open housing (36, 64).

9. A windshield wiper arm according to one of the preceding Claims,
**characterised in that** the spring stem (24, 29) has depressions (68, 70).
